# EUROPÄISCHE PATENTANMELDUNG

(11) **EP 1 346 875 A2**
(43) Veröffentlichungstag der Anmeldung: **24.09.2003**
(21) Anmeldenummer: 03100479.9
(22) Anmeldetag: 27.02.2003
(51) Int. Cl.: B60Q 1/14, F21V 9/04

(54) **Einrichtung zur automatischen Schaltung von Beleuchtungseinrichtungen bei Fahrzeugen**

(30) Priorität: 01.03.2002 DE 10209266
(71) Anmelder: Hella KG Hueck & Co., 59552 Lippstadt (DE)
(72) Erfinder: Kühnau, Uwe, 59227 Ahlen (DE); Blaut, Andreas, 59423 Unna (DE)

(57) **Zusammenfassung**

Die Erfindung bezieht sich auf eine Einrichtung zur automatischen Schaltung von Beleuchtungseinrichtungen bei Fahrzeugen,
mit
- einer Lichtsensoreinrichtung zur Erfassung der Lichtverhältnisse, wobei die Lichtsensoreinrichtung einen Globallichtsensor mit im wesentlichen nach oben weisendem Erfassungsbereich aufweist, der die Lichtverhältnisse in der Umgebung des Fahrzeuges erfasst, und einen Vorfeldlichtsensor mit in Fahrtrichtung weisendem Erfassungsbereich aufweist,
- einer Steuereinheit, welche anhand der Signale der beiden Lichtsensoren die Beleuchtungseinrichtung ein- oder ausschaltet.

Erfindungsgemäß ist nun der Vorfeldlichtsensor nur im Infraroten-Spektralbereich ab einer Wellenlänge größer als 780 nm empfindlich.

## Beschreibung

Die Erfindung betrifft eine Einrichtung zur automatischen Schaltung von Beleuchtungseinrichtungen bei Fahrzeugen mit einer Lichtsensoreinrichtung zur Erfassung der Lichtverhältnisse in der Umgebung des Fahrzeuges. Dabei weist die Lichtsensoreinrichtung einen Globallichtsensor mit im wesentlichen nach oben weisendem Erfassungsbereich (Erfassungskegel/Raumwinkel) auf, der die Lichtverhältnisse in der Umgebung des Fahrzeuges weitgehend ungerichtet erfasst, und einen Vorfeldlichtsensor mit in Fahrtrichtung weisendem Erfassungsbereich auf. Der Globalsensor dient dazu, dann wenn das Umgebungslicht einen bestimmten Schwellwert unterschreitet (z.b. bei einbrechender Dämmerung, bei bewölktem Himmel oder innerhalb eines Tunnels) eine Einschaltung der Beleuchtungseinrichtung, insbesondere des Fahrlichtes zu bewirken. Der Vorfeldlichtsensor dient dazu, länger abgedunkelte Fahrbahnabschnitte (Tunnel) von kürzer abgedunkelten Fahrbahnabschnitten (Brückenunterführung) zu unterscheiden. Damit kann ein unnötiges Einschalten der Beleuchtungseinrichtung im Falle einer Brückenunterführung vermieden werden. Darüber hinaus dient der Vorfeldlichtsensor dazu, einen in Fahrtrichtung vor dem Fahrzeug liegenden Tunnel vorher zu erkennen und somit in Verbindung mit dem Globallichtsensor rechtzeitig kurz vor Einfahrt in den Tunnel oder zumindest unmittelbar bei Einfahrt in den Tunnel eine Einschaltung der Beleuchtungseinrichtung zu bewirken. Die Signale der beiden Lichtsensoren werden einer Steuereinheit zugeführt, die anhand der beiden Signale die Beleuchtungseinrichtung ein- oder ausschaltet.

Eine derartige Einrichtung ist bspw. aus der DE 196 30 216 A1 bekannt.
Aus der DE 195 23 262 A1 ist es ferner bekannt, dem lichtempfindlichen Sensorelement ein optisches Filter vorzuschalten, das nur Licht unterhalb einer Wellenlänge λₒ durchlässt. Dies soll eine Unterscheidung des natürlichem Sonnenlichts vom künstlichen Licht der Straßenund Tunnelbeleuchtung ermöglichen, da Kunstlicht im Vergleich zum natürlichen Sonnenlicht Licht überwiegend Licht längerer Wellenlängen abstrahlt. Dies trifft jedoch nur für Glühlampen zu, die jedoch als Straßen- oder Tunnelbeleuchtung fast überhaupt nicht mehr eingesetzt werden. Für die Straßen- oder Tunnelbeleuchtung werden vielmehr fast ausschließlich Gasentladungslampen, insbesondere Leuchtstofflampen eingesetzt, die im wesentlichen mit einem hohen Wirkungsgrad Licht im sichtbaren Spektralbereich erzeugen.

Darüber hinaus sind immer mehr Fahrzeuge mit sogenannten Xenon-Scheinwerfern im Einsatz, die ebenfalls eine Gasentladungslampe aufweisen, so daß Fahrzeuge mit diesen Scheinwerfern im Straßenverkehr ebenfalls eine relativ intensive Kunstlichtquelle im sichtbaren Spektralbereich darstellen.

Aus der DE 100 20 477 A1 ist es weiterhin bekannt, einen Globallichtsensor zu verwenden, der nur in dem schmalen Spektralbereich von 400nm bis 525 nm empfindlich ist, um eine Annäherung an die Empfindlichkeit des menschlichen Auges zu erreichen.

Ein Problem besteht nun darin, daß der Vorfeldlichtsensor trotz seines schmalen in Fahrtrichtung weisenden Erfassungskegel dennoch einen Teil des Kunstlichts der Tunnelbeleuchtung und/oder das Licht entgegenkommender Fahrzeuge, insbesondere mit Xenon-Scheinwerfern, erfasst. Dies kann dazu führen, daß das Signal des Vorfeldlichtsensors bei Einfahrt in einen Tunnel eine Schwelle, ab der ein Tunnel erkannt wird, nicht unterschreitet, so daß fälschlicher Weise kein Tunnel erkannt wird und die Beleuchtungseinrichtung nicht eingeschaltet wird. Dies Problem wird noch dadurch verschärft, daß das Signal des Vorfeldlichtsensors im Vergleich zum Globallichtsensor wesentlich höher verstärkt wird, damit der Vorfeldlichtsensor das helle Ende einer Brückenunterführung rechtzeitig erkennt und somit ein unnötiges Einschalten der Beleuchtungseinrichtung verhindert. Diese hohe Verstärkung kann jedoch bei Einfahrt in einen beleuchteten Tunnel je nach Intensität und Anordnung der Tunnelbeleuchtung oder bei Blendung durch den Gegenverkehr in nachteiliger Weise bewirken, daß das Kunstlicht so stark verstärkt wird, daß der Tunnel erst gar nicht erkannt wird.

Dieses Kunstlicht-Problem im Zusammenhang mit dem Vorfeldlichtsensor wird erfindungsgemäß dadurch gelöst, daß der Vorfeldlichtsensor nur im infraroten Spektralbereich ab einer Wellenlänge größer als 780 nm empfindlich ist. Damit reagiert der Vorfeldlichtsensor nur auf den Infrarotanteil im natürlichen Sonnenlicht, um durch eine Brückenunterführung "hindurch zu sehen" oder das Sonnenlicht an einem Tunnelausgang zu "erblicken".

Diese Lösung des Problems, die mit anderen Worten darin besteht, sich für die Vorfeldlichterkennung nur des Infrarotanteils des Sonnenlichtes zu bedienen, war überraschend, da der Fachmann angesichts der DE 195 23 262 A1 eigentlich dazu angeleitet wird, zur Trennung des natürlichen Sonnenlichts vom Kunstlicht ein optisches Filter zu verwenden, daß nur Licht unterhalb einer gewissen Wellenlänge durchlässt, wobei gerade der Infrarotanteil des Sonnenlichtes ausgeblendet oder zumindest stark abgeschwächt würde.

Die der Erfindung zugrunde liegende Idee geht davon aus, daß der Vorfeldlichtsensor im Unterschied zum Globalsensor die Lichteinstrahlung auch nicht einmal annähernd wie das menschliche Auge bewerten muß, während der Globalsensor idealer Weise gerade so funktionieren sollte. Der Vorfeldlichtsensor liefert lediglich eine Zusatzinformation, die dazu dient, länger abgedunkelte Fahrbahnabschnitte (Tunnel), welche einer Einschaltung der Beleuchtungseinrichtung bedürfen, von kürzer abgedunkelten Fahrbahnabschnitten (Brückenunterführung), bei denen ein Einschalten der Beleuchtungseinrichtung unnötig ist, zu unterscheiden.

Darüber hinaus bewirken die Scheinwerfer des Gegenverkehrs bei der erfindungsgemäßen Einrichtung im Unterschied zur Einrichtung gemäß DE 195 23 262 A1 keine Blendung des Vorfeldlichtsensors mehr, so daß ein Tunnel auch dann noch sicher erkannt wird, wenn bei der Einfahrt in einen Tunnel Fahrzeuge mit Xenon-Scheinwerfern entgegen kommen.

Da der störende Kunstlichtanteil wegfällt kann das Signal des Vorfeldlichtsensors ohne Probleme auch höher verstärkt werden, so daß Brückenunterführungen und Tunnelausgänge auch bei jahreszeitlich und/oder wetterbedingtem schwachem IR-Anteil am Sonnenlicht sicher erkannt werden.

Vorteilhafte Ausführungsformen sind aus der Beschreibung und den Unteransprüchen zu entnehmen. Anhand der beigefügten Zeichnungen soll die Erfindung nachfolgend näher erläutert werden. Es zeigt:
- Figur 1: eine schematische Darstellung eines Fahrzeuges mit einem Globallichtsensor und einem Vorfeldlichtsensor,
- Figur 2: eine Darstellung des Vorfeldlichtsensors, der hinter der Windschutzscheibe des Fahrzeuges angeordnet ist,
- Figur 3: eine Darstellung wie in Figur 2, jedoch mit einem optischen Filter, das dem lichtempfindlichen Element vorgeschaltet ist und nur Infrarotlicht durchlässt.

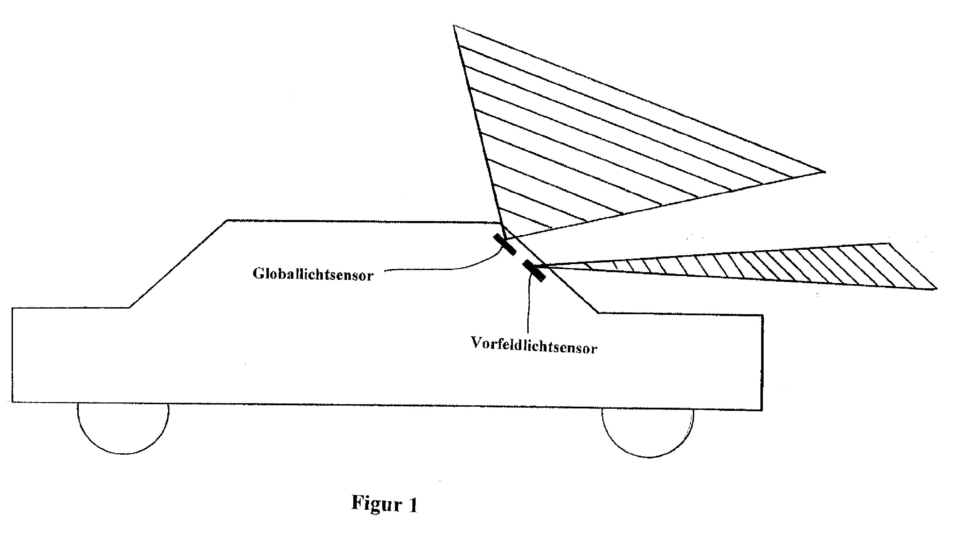

Figur 1 zeigt eine schematische Darstellung eines Fahrzeuges mit einem Globallichtsensor und einem Vorfeldlichtsensor. Beide Sensoren sind vorzugsweise hinter der Windschutzscheibe angeordnet und in einem Gehäuse (nicht dargestellt) integriert. Dabei kann in diesem Gehäuse auch noch ein ebenfalls optisch arbeitender Regensensor (nicht dargestellt) integriert sein. Wie zu erkennen ist, ist der Erfassungsbereich (Erfassungskegel) des Globallichtsensors im wesentlichen nach oben, dem Himmel zugewandt, ausgerichtet, während der Erfassungsbereich des Vorfeldlichtsensors in Fahrtrichtung ausgerichtet ist. Der Erfassungsbereich des Globallichtsensors kann vertikal nach oben oder auch nur schräg nach oben ausgerichtet sein. Dabei ist der Erfassungsbereich (Erfassungskegel) des Vorfeldlichtsensors insbesondere in vertikaler Richtung kleiner als der des Globallichtsensors.

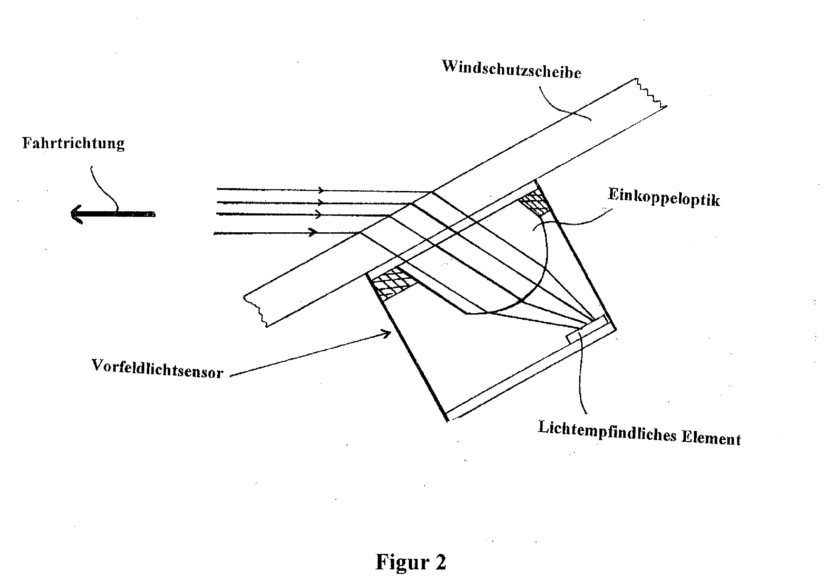

Figur 2 zeigt eine Darstellung des Vorfeldlichtsensors, der hinter der Windschutzscheibe des Fahrzeuges angeordnet ist. Dabei weist der Vorfeldlichtsensor eine unmittelbar oder über ein Zwischenmedium an der Windschutzscheibe anliegende Einkoppeloptik auf, über die das durch die Windschutzscheibe einfallende Vorfeldlicht gebündelt auf das lichtempfindliche Element gerichtet wird. Das lichtempfindliche Element wird vorzugsweise von einer Photodiode gebildet.

In einer ersten Ausführungsform wird nun ein lichtempfindliches Sensorelement verwendet, das eine inhärente spektrale Empfindlichkeit im Infraroten-Spektralbereich ab einer Wellenlänge größer als 780nm aufweist.

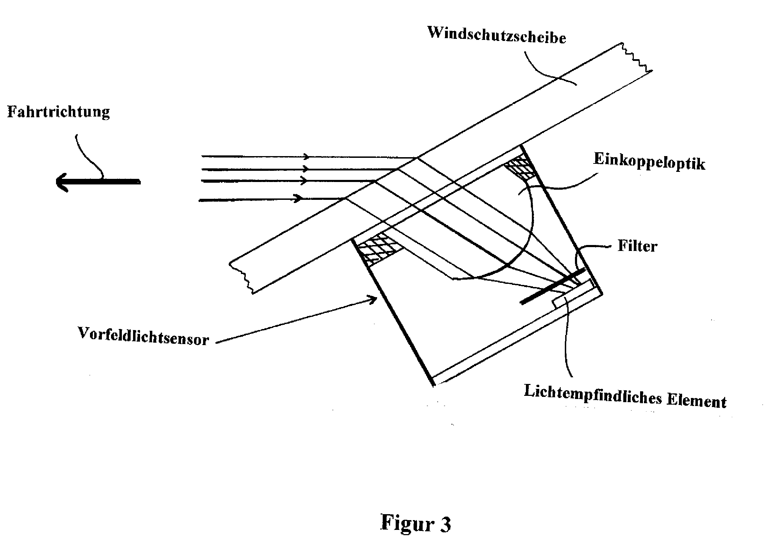

In einer zweiten Ausführungsform weist der Vorfeldlichtsensor ein optisches Filter auf, das dem lichtempfindlichen Sensorelement vorgeschaltet ist, wobei das Filter nur infrarotes Licht ab einer Wellenlänge von 780 nm durchlässt - siehe Figur 3.

In einer weiteren Ausführungsform dient die Lichteinkoppeloptik als optisches Filter. Für diesen Zweck wird das Material der Lichteinkoppeloptik entsprechend so ausgewählt, daß nur infrarotes Licht ab einer Wellenlänge von 780 nm durchgelassen wird, während sichtbares Licht absorbiert wird. Dabei kann der Fachmann sich bspw. verschiedener schwarz eingefärbter Kunststoffe bedienen.

In einer noch weiteren Ausführungsform ist das optische Filter der Lichteinkoppeloptik vorgeschaltet. Hierbei kann es sich bspw. um eine Zwischenschicht zwischen Windschutzscheibe und Einkoppeloptik handeln.

## Patentansprüche

1. Einrichtung zur automatischen Schaltung von Beleuchtungseinrichtungen bei Fahrzeugen, mit
- einer Lichtsensoreinrichtung zur Erfassung der Lichtverhältnisse, wobei die Lichtsensoreinrichtung einen Globallichtsensor mit im wesentlichen nach oben weisendem Erfassungsbereich aufweist, der die Lichtverhältnisse in der Umgebung des Fahrzeuges erfasst, und einen Vorfeldlichtsensor mit in Fahrtrichtung weisendem Erfassungsbereich aufweist,
- einer Steuereinheit, welche anhand der Signale der beiden Lichtsensoren die Beleuchtungseinrichtung ein- oder ausschaltet,
**dadurch gekennzeichnet, daß**
der Vorfeldlichtsensor nur im Infraroten-Spektralbereich ab einer Wellenlänge größer als 780 nm empfindlich ist.

2. Einrichtung nach Anspruch 1,
**dadurch gekennzeichnet, daß**
der Vorfeldlichtsensor ein lichtempfindliches Sensorelement mit einer inhärenten spektralen Empfindlichkeit im Infraroten-Spektralbereich ab einer Wellenlänge größer als 780nm aufweist.

3. Einrichtung nach Anspruch 1,
**dadurch gekennzeichnet, daß**
der Vorfeldlichtsensor ein optisches Filter aufweist, das dem lichtempfindlichen Sensorelement vorgeschaltet ist, wobei der Filter nur infrarotes Licht ab einer Wellenlänge von 780 nm durchlässt.

4. Einrichtung nach Anspruch 1,
**dadurch gekennzeichnet, daß**
der Vorfeldlichtsensor eine Lichteinkoppeloptik aufweist, mit der die Lichtstrahlen gebündelt auf das lichtempfindliche Sensorelement gerichtet werden, wobei das Material der Lichteinkoppeloptik als optisches Filter wirkt, so daß die Lichteinkoppeloptik nur infrarotes Licht ab einer Wellenlänge von 780 nm durchlässt.

5. Einrichtung nach Anspruch 1,
**dadurch gekennzeichnet, daß**
der Vorfeldlichtsensor eine Lichteinkoppeloptik aufweist, mit der die Lichtstrahlen gebündelt auf das lichtempfindliche Sensorelement gerichtet werden, wobei der Lichteinkoppeloptik ein optisches Filter vorgeschaltet ist, das nur infrarotes Licht ab einer Wellenlänge von 780 nm durchlässt.
